# EUROPEAN PATENT SPECIFICATION

(11) **EP 1 288 900 B1**
(45) Date of publication and mention of the grant of the patent: **30.09.2015**
(21) Application number: 01999935.8
(22) Date of filing: 05.12.2001
(51) Int. Cl.: G09G 3/20, G09G 3/36

(54) **ACTIVE MATRIX DISPLAY DEVICE AND MOBILE TERMINAL USING THE DEVICE**
ANZEIGEVORRICHTUNG MIT AKTIVER MATRIX UND DIESE VORRICHTUNG BENUTZENDES MOBILES ENDGERÄT
DISPOSITIF D'AFFICHAGE A MATRICE ACTIVE ET TERMINAL MOBILE UTILISANT CE DISPOSITIF

(30) Priority: 06.12.2000 JP 2000371046
(43) Date of publication of application: 05.03.2003
(73) Proprietor: Japan Display Inc., Tokyo 105-0003 (JP)
(72) Inventor: NAKAJIMA, Yoshiharu, Tokyo 141-0001 (JP)
(74) Representative: Delumeau, François Guy
(86) International application number: PCT/JP2001/010630
(87) International publication number: WO 2002/047060

(56) References cited:
- EP-A- 0 994 458
- WO-A-96/41253
- JP-A- 7 230 077
- JP-A- 9 090 908
- JP-A- 10 326 084
- JP-A- 2001 188 499
- JP-A- 2001 331 153
- JP-A- 2001 345 928
- US-A- 5 523 772
- US-A- 5 537 650

## Description

### Technical Field

This invention relates to an active matrix type display apparatus and a portable terminal using the same, and more particularly to an active matrix type display apparatus wherein a polycrystalline silicon TFT (Thin Film Transistor) is used as a switching element of a pixel and a portable terminal wherein the active matrix type display apparatus is used as a display section.

### Background Art

In recent years, portable terminals such as portable telephone sets and PDA (Personal Digital Assistants) have been popularized remarkably. One of the factors of such rapid popularization of portable terminals is considered a liquid crystal display apparatus incorporated as an output display section of the portable terminals. The reason is that the liquid crystal display apparatus has a characteristic that power for driving the same is not required in principle and is a display device of low power consumption.

In such portable terminals as described above, a demand for further reduction of power consumption of a display apparatus is increasing as such rapid popularization of portable terminals. Reduction of the power consumption particularly within a standby period is a significant point for increasing the duration of a battery, and therefore, this is one of the items for which the demand is strong. Various power saving techniques have been proposed to satisfy the demand. One of such techniques is the 1-bit mode (two-gradation mode) which restricts the number of gradations of a display of an image in a standby state to "2" (1 bit) for each color. According to the 1-bit mode, a gradation is represented with 1 bit for each color, and therefore, an image is displayed using totaling eight colors.

Incidentally, in a liquid crystal active matrix type display apparatus wherein an amorphous silicon TFT is used as a switching element of each of a large number of pixels arranged in a matrix manner, a number of analog circuits (buffer circuits) equal to the number of outputs are disposed in an output section of a data line driving circuit (horizontal driving circuit). Since fixed bias current must always be supplied to the buffer circuits, the buffer circuits make a major factor which consumes such a high power.

The data line driving circuit of the amorphous silicon TFT liquid crystal display apparatus conventionally adopts a configuration that, in order to allow the same to deal with the 1-bit mode described above, a CMOS inverter is connected in parallel to each of the buffer circuits of the output section and is used in place of the buffer circuit when the gradation number is to be restricted to "2" as a result of setting of the 1-bit mode. Since no DC current may be supplied to the CMOS inverter and therefore the DC current to the output section of the data line driving circuit can be reduced significantly, reduction of the power consumption can be achieved. Examples of such a display apparatus are given by the prior art documents WO9641253 and US5537650.

Meanwhile, in a liquid crystal active matrix type display apparatus wherein a polycrystalline silicon TFT is used as a switching element of a pixel in recent years, there is a tendency to form a digital interface driving circuit integrally on the same substrate as that of a display area section on which pixels are arranged in a matrix manner. In the polycrystalline silicon TFT liquid crystal display apparatus of the driving circuit integration type, a horizontal driving system and a vertical driving system are disposed at peripheral portions (a frame) of the display area section and are formed integrally on the same substrate as that of the pixel area section using a polycrystalline silicon TFT.

However, in the polycrystalline silicon TFT liquid crystal display apparatus of the driving circuit integration type, no buffer is disposed in the output section, different from the amorphous silicon TFT liquid crystal display apparatus. Accordingly, the technique for reducing the power consumption by the output section cannot be adopted as in the case of the amorphous silicon TFT liquid crystal display apparatus, and naturally, reduction of the power consumption by the 1-bit mode cannot be applied.

The present invention has been made in view of the subject described above, and it is an object of the present invention to provide an active matrix type display apparatus to which reduction of the power consumption by the 1-bit mode can be applied while it uses a polycrystalline silicon TFT structure of the driving circuit integration type thereby to achieve further reduction of the power consumption and a portable terminal wherein the active matrix type display apparatus is used as a display section.

### Disclosure of Invention

The present invention is defined according to the appended set of claims. In order to attain the object described above, according to the present invention, an active matrix type display apparatus which includes a display area section wherein pixels each having an electro-optical device are disposed in a matrix manner, a vertical driving circuit for selecting the pixels of the display area section in a unit of a row, and a horizontal driving circuit for receiving digital image data as an input thereto and supplying the digital image data as an analog image signal to the pixels of a row selected by the vertical driving circuit is configured such that, when a low gradation mode which uses a smaller number of gradations than a normal mode is set, only a number of circuit portions of the horizontal driving circuit equal to the number of gradations are placed into an active state.

In the active matrix type display apparatus having the configuration described above or the portable terminal which uses the active matrix type display apparatus, only a number of circuit portions equal to the number of gradations in the horizontal driving circuit are placed into an active state when the low gradation mode wherein a smaller number of gradations than that in the normal mode are used is set while the remaining circuit portions are placed into an inactive state and do not consume the power. Consequently, reduction of the power consumption can be anticipated as much.

### Brief Description of Drawings

FIG. 1 is a view of a schematic configuration showing an example of a configuration of an active matrix type display apparatus according to an embodiment of the present invention;
FIG. 2 is a circuit diagram showing an example of a configuration of a display area section of a liquid crystal display apparatus;
FIG. 3 is a block diagram particularly showing a mutual relationship among different components on a glass substrate;
FIG. 4 is a block diagram showing an example of a particular configuration of a sampling latch circuit;
FIG. 5 is a block diagram showing an example of a particular configuration of a line sequence latch circuit;
FIG. 6 is a circuit diagram showing an example of a configuration of a unit circuit of a reference voltage selection type D/A conversion circuit;
FIG. 7 is a circuit diagram showing an example of a configuration of a reference voltage generation circuit;
FIG. 8 is a timing chart illustrating operation of the reference voltage generation circuit according to the example of the configuration;
FIG. 9 is a circuit diagram showing another example of the configuration of the reference voltage generation circuit;
FIG. 10 is a timing chart illustrating operation of the reference voltage generation circuit according to the another example of the configuration; and
FIG. 11 is a view of an appearance showing a general configuration of a portable telephone set which is a portable terminal according to the present invention.

### Best Mode for Carrying out the Invention

In the following, embodiments of the present invention are described in detail with reference to the drawings.

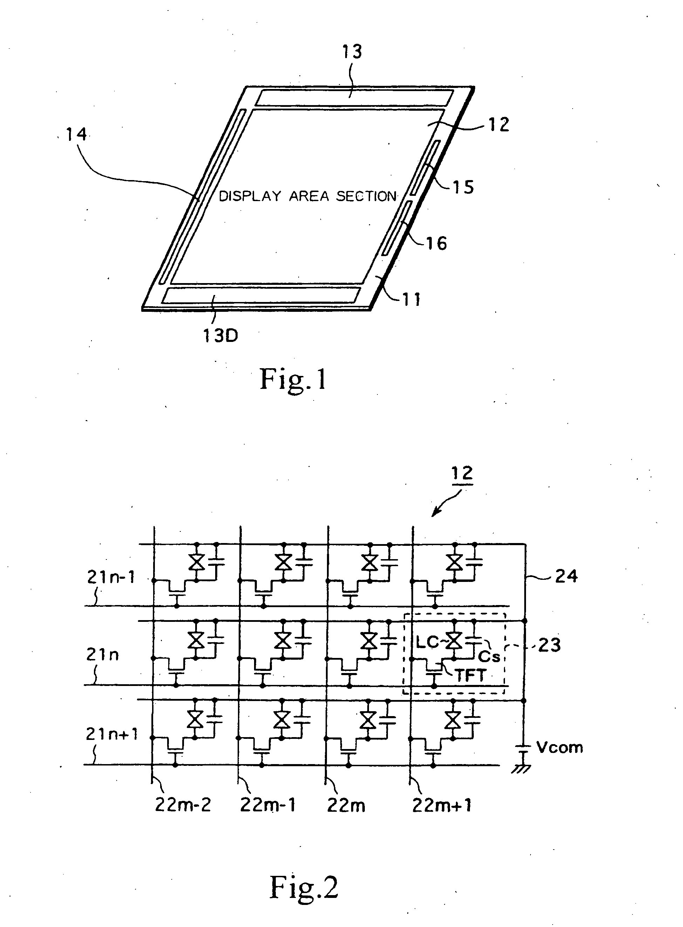

FIG. 1 is a view of a schematic configuration showing an example of a configuration of a display apparatus according to the present invention. Here, description is given taking, as an example, a case wherein the present invention is applied, for example, to a liquid crystal active matrix type display apparatus in which a liquid crystal cell is incorporated as an electro-optical element of each pixel.

Referring to FIG. 1, a display area section 12 wherein a large number of pixels each including a liquid crystal cell are disposed in a matrix manner, a pair of upper and lower H drivers (horizontal driving circuits) 13U and 13D and a V driver (vertical driving circuit) 14 as well as a reference voltage generation circuit 15 for generating a plurality of reference voltages and a 1-bit mode control circuit 16 are integrated on a transparent insulation substrate, for example, a glass substrate 11. The glass substrate 11 is formed from a first substrate wherein a large number of pixel circuits each including an active device (for example, a transistor) are disposed in a matrix manner and a second substrate disposed in an opposing relationship to the first substrate with a predetermined gap left therebetween. A liquid crystal material is enclosed in a space between the first and second substrates.

An example of a particular configuration of the display area section 12 is shown in FIG. 2. Here, in order to simplify the drawing, a pixel arrangement of three rows (n-1th row to n+1th row) and four columns (m-2th column to m+1th column) is shown as an example. In FIG. 2, vertical scanning lines ···, 21n-1, 21n, 21n+1, ···, and data lines ···, 22m-2, 22m-1, 22m, 22m+1, ··· are wired in a matrix manner on the display area section 12, and a unit pixel 23 is disposed at each of intersection points of the vertical scanning lines and the data lines.

The unit pixel 23 includes a thin film transistor TFT which is a pixel transistor, a liquid crystal cell LC and a storage capacitor Cs. Here, the liquid crystal cell LC signifies a capacitor which is produced between a pixel electrode (one electrode) formed from the thin film transistor TFT and a counter-electrode (the other electrode) formed in an opposing relationship to the pixel electrode.

The gate electrode of the thin film transistor TFT is connected to the vertical scanning lines ···, 21n-1, 21n, 21n+1,··· , and the source electrode of the thin film transistor TFT is connected to the data lines ···, 22m-2, 22m-1, 22m, 22m+1, ···. The pixel electrode of the liquid crystal cell LC is connected to the drain electrode of the thin film transistor TFT and the counter-electrode of the liquid crystal cell LC is connected to a common line 24. The storage capacitor Cs is connected between the drain electrode of the thin film transistor TFT and the common line 24. A predetermined DC voltage is applied as a common voltage Vcom to the common line 24.

One terminal of each of the vertical scanning lines ···, 21n-1, 21n, 21n+1, ··· is connected to an output terminal of the V driver 14 shown in FIG. 1 for a corresponding one of the rows. The V driver 14 is formed from, for example, a shift register, and successively generates a vertical selection pulse in synchronism with a vertical transfer clock VCK (not shown) and applies it to the vertical scanning lines ···, 21n-1, 21n, 21n+1, ··· to perform vertical scanning.

Meanwhile, in the display area section 12, for example, one terminal of each of the data lines of odd numbers ···, 21n-1, 21n+1, ··· is connected to an output terminal of the H driver 13U shown in FIG. 1 for a corresponding one of the columns and each of the other terminals of the data lines of even numbers ···, 22m-2, 22m, ··· is connected to an output terminal of the H driver 13D shown in FIG. 1 for a corresponding one of the columns.

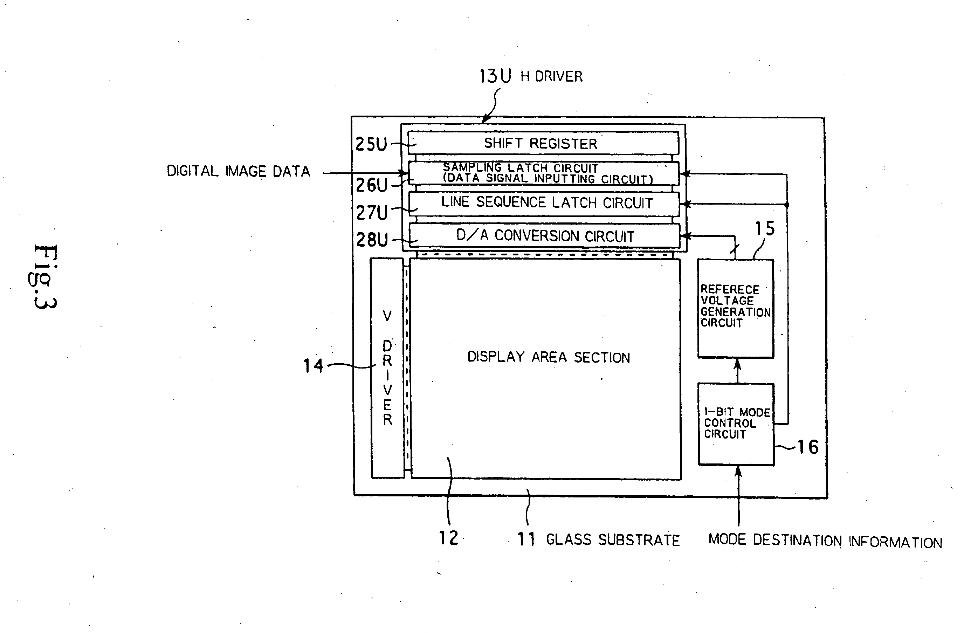

FIG. 3 is a block diagram particularly showing a mutual relationship of different components on the glass substrate 11. Here, only the H driver 13U on the upper side is shown for simplification of the drawing. However, also the H driver 13D on the lower side has a quite similar configuration to that to the H driver 13U. It is to be noted that, while the liquid crystal active matrix type display apparatus according to the present example adopts the configuration wherein the H drivers 13U and 13D are disposed above on the upper and lower sides of the display area section 12, the configuration is not limited to this, and it is otherwise possible to adopt another configuration wherein the H drives 13U and 13D are disposed on only one of the upper and lower sides of the display area section 12.

As shown in FIG. 3, the H driver 13U includes a shift register 25U, a sampling latch circuit (data signal inputting circuit) 26U, a line sequence latch circuit 27U, and a D/A conversion circuit 28U. The shift resister 25U sequentially outputs a shift pulse from each transfer stage thereof in synchronism with a horizontal transfer clock HCK (not shown) to perform horizontal scanning. The sampling latch circuit 26U samples and latches, in point sequence, digital image data of predetermined bits inputted in response to the shift pulse supplied thereto from the shift register 25U to latch the digital image data.

The line sequence latch circuit 27U latches the digital image data latched in point sequence by the sampling latch circuit 26U in a unit of one line again to perform line sequence of the digital image data, and outputs the digital image data for one line at a time. The D/A conversion circuit 28U has a configuration of, for example, a circuit of the reference voltage selection type, and converts the digital image data for one line outputted from the line sequence latch circuit 27U into an analog image signal and supplies it to the data lines ···, 22m-2, 22m-1, 22m, 22m+1, ··· of the pixel area section 12.

The reference voltage generation circuit 15 is a circuit attendant on the reference voltage selection type D/A conversion circuit 28U, and generates a number of reference voltages equal to the number of gradations corresponding to the bit number of input image data and applies the reference voltages to the reference voltage selection type D/A conversion circuit 28U. The 1-bit mode control circuit 16 performs control of the horizontal driving system (H drivers 13U and 13D) including the reference voltage generation circuit 15 to render only a number of circuit portions equal to the number of gradations (in the present example, 2 gradations) into an active state when a low gradation mode which is one of the power saving modes, for example, a 2-gradation mode (1-bit mode) is designated.

It is to be noted that, while, in the liquid crystal active matrix type display apparatus according to the present example, all of the components of the horizontal driving system, that is, the shift register 25U, sampling latch circuit 26U, line sequence latch circuit 27U and D/A conversion circuit 28U shown in FIG. 3, are formed integrally on the same glass substrate 11 together with the display area section 12, alternatively only one of them may be formed integrally.

Where also the reference voltage generation circuit 15 and the 1-bit mode control circuit 16 are formed integrally on the same glass substrate 11 together with the display area section 12, for example, in the case of a liquid crystal active matrix type display apparatus which adopts the configuration wherein the H drivers 13U and 13D are disposed on the upper and lower sides of the display area section 12, preferably the reference voltage generation circuit 15 and the 1-bit mode control circuit 16 are disposed in a frame area (peripheral area of the display area section 12) on a side or sides on which the H drivers 13U and 13D are not incorporated.

The reason is that, since the H drivers 13U and 13D include a great number of components when compared with the V driver 14 as described above and in most cases have a very great circuit area, where they are disposed in the frame area on a side or sides on which the H drivers 13U and 13D are not disposed, the reference voltage generation circuit 15 and the 1-bit mode control circuit 16 can be integrated on the same glass substrate 11 as that of the display area section 12 without deteriorating the effective screen ratio (the area ratio of the display area section 12 to the glass substrate 11).

It is to be noted that the liquid crystal active matrix type display apparatus according to the present example adopts the configuration wherein, since the V driver 14 is mounted on one side of the frame area on one of the two sides on which the H drivers 13U and 13D are not disposed, the reference voltage generation circuit 15 and the 1-bit mode control circuit 16 are integrated in the frame area on another side on which the H drivers 13U and 13D are not disposed.

Further, upon such integration of the H drivers 13U and 13D, V driver 14, reference voltage generation circuit 15 and 1-bit mode control circuit 16, since a polycrystalline silicon thin film transistor TFT is used for the pixel transistors of the display area section 12, if a polycrystalline silicon thin film transistor is used also for the transistors which form the components mentioned and at least the transistor circuits of the same are produced on the same glass substrate 11 together with the display area section 12, then they can be produced readily and besides can be implemented at a low cost.

With regard to the thin film transistor TFT, as things stand, integration has become easy thanks to the augmentation in performance and reduction of the power consumption in recent years. Accordingly, where the H drivers 13U and 13D, V driver 14, reference voltage generation circuit 15 and 1-bit mode control circuit 16, particularly at least transistor circuits of components of them, are formed integrally on the same glass substrate 11 by the same process using a thin film transistor same as that used for the pixel transistors of the display area section 12, reduction of the cost by simplification of the production process and besides reduction in thickness and compaction by integration can be achieved.

In the following, particular examples of a configuration and operation of the components of the horizontal driving system are described. It is to be noted that, in each example of a configuration, a case wherein digital image data is 3-bit data is taken as an example, and, for simplification of the drawings, a configuration of only circuit portions corresponding to transfer stages 25Uk and 25Uk+1 of the kth and k+1th stages of the shift register 25U is shown and described.

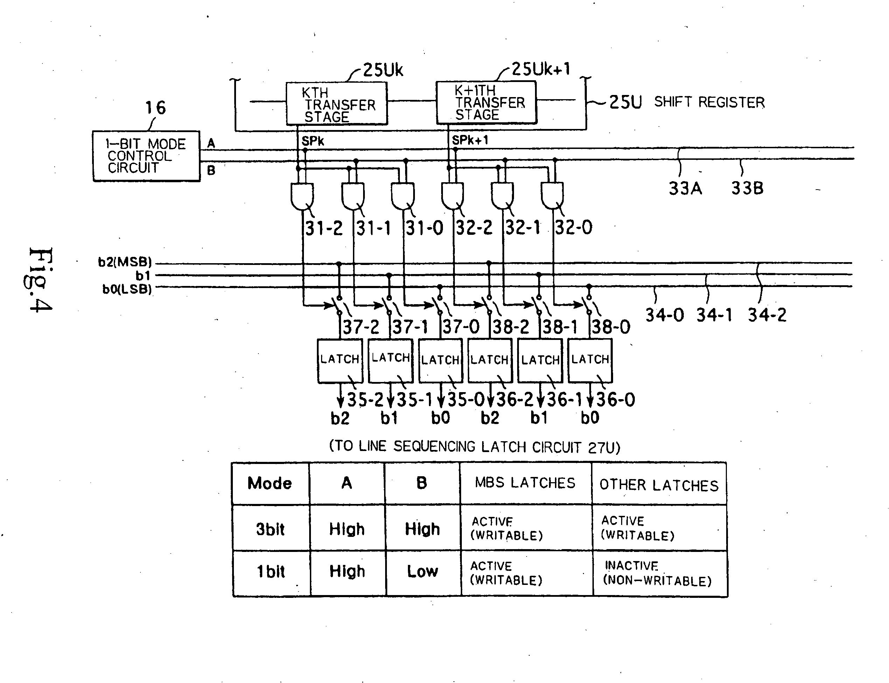

FIG. 4 is a block diagram showing a particular example of a configuration of the sampling latch circuit 26U. Referring to FIG. 4, three AND circuits 31-0, 31-1 and 31-2 are provided corresponding to the transfer stage 25Uk of the kth stage of the shift register 25U and three AND circuits 32-0, 32-1 and 32-2 are provided corresponding to the transfer stage 25Uk+1 of the k+1th stage of the shift register 25U. The number of the AND circuits is a number corresponding to the bit number "3" of the digital image data.

Shift pulses of the transfer stages 25Uk and 25Uk+1 of the shift register 25U are applied as sampling pulses SPk and SPk+1 to input terminals of the AND circuits 31-0, 31-1, 31-2, 32-0, 32-1 and 32-2 on one side. A control signal A is applied to the other input terminals of the AND circuits 31-2 and 32-2 from the 1-bit mode control circuit 16 over a control line 33A. Meanwhile, a control signal B is applied to the other input terminals of the AND circuits 31-0, 31-1, 32-0 and 32-1 from the 1-bit mode control circuit 16 over a control line 33B.

To the present sampling latch circuit 26U, digital image data of, for example, 3 bits is inputted over bit lines 34-0, 34-1 and 34-2. Latch circuits 35-0, 35-1 and 35-2 and latch circuits 36-0, 36-1 and 36-2 are provided for latching the digital image data of 3 bits in response to the sampling pulses SPk and SPk+1 outputted successively from the transfer stages 25Uk and 25Uk+1 of the shift register 25U.

Switches 37-0, 37-1 and 37-2 are connected between the input terminals of the latch circuits 35-0, 35-1 and 35-2 and the bit lines 34-0, 34-1 and 34-2, and switches 38-0, 38-1 and 38-2 are connected between the input terminals of the latch circuits 36-0, 36-1 and 36-2 and the bit lines 34-0, 34-1 and 34-2. The switches 37-0, 37-1, 37-2, 38-0, 38-1 and 38-2 are controlled between on (close)/off (open) with outputs of the AND circuits 31-0, 31-1, 31-2, 32-0, 32-1 and 32-2, respectively.

Subsequently, circuit operation of the sampling latch circuit 26U having the above-described configuration is described.

First, in a normal mode (3-bit mode), the control signals A and B both having the "H" level (high level) are outputted from the 1-bit mode control circuit 16. Consequently, the sampling pulses SPk and SPk+1 successively outputted from the transfer stages 25Uk and 25Uk+1 of the shift register 25U are supplied to all of the switches 37-0, 37-1, 37-2, 38-0, 38-1 and 38-2 through the AND circuits 31-0 to 31-2 and 32-0 to 32-2, respectively. As a result, all of the latch circuits 35-0 to 35-2 and 36-0 to 36-2 are placed into an active state, that is, into a state wherein data can be written into (latched by) them.

On the other hand, when the 1-bit mode is set, the control signal A of the "H" level and the control signal B of the "L" level (low level) are outputted from the 1-bit mode control circuit 16. Consequently, since only the AND circuits 31-2 and 32-2 corresponding to the most significant bit (MSB) are placed into a passage permitting state, the sampling pulses SPk and SPk+1 successively outputted from the transfer stages 25Uk and 25Uk+1 of the shift register 25U are supplied only to the switches 37-2 and 38-2 through the AND circuits 31-2 and 32-2, respectively.

As a result, only the latch circuits 35-2 and 36-2 are placed into a data re-write permitting state (active state) while the latch circuits 35-0, 35-1, 36-0 and 36-1 are placed into a data write inhibiting state (inactive state). Consequently, when the 1-bit mode is set, the writable current upon latching rewriting operation decreases, and as a result, reduction of the power consumption as much can be anticipated.

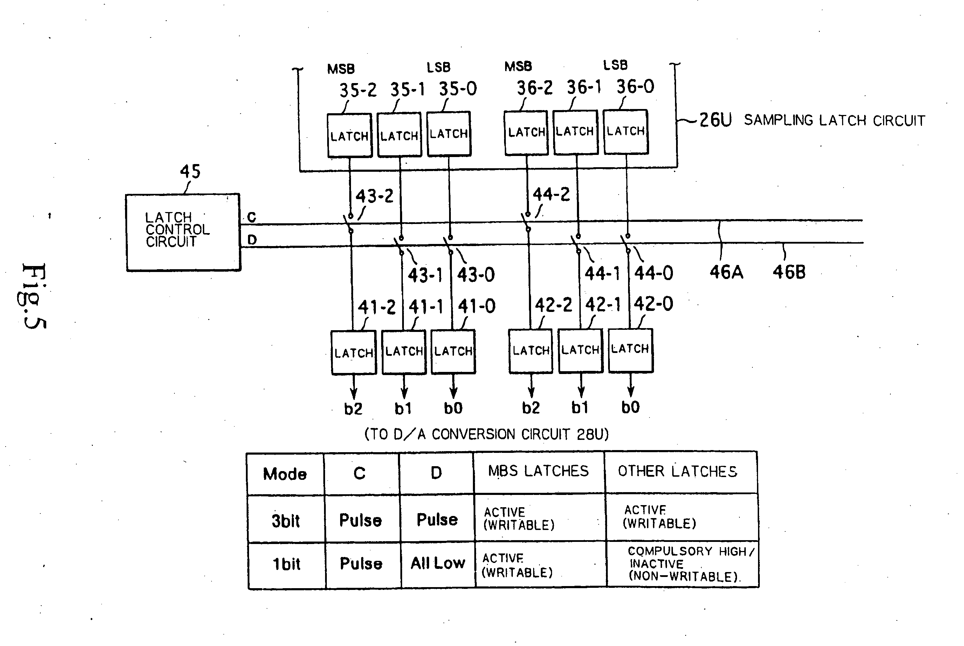

FIG. 5 is a block diagram showing a particular example of a configuration of the line sequence latch circuit 27U. Referring to FIG. 5, latch circuits 41-0, 41-1, 41-2, 42-0, 42-1 and 42-2 are provided corresponding to the latch circuit 35-0, 35-1, 35-2, 36-0, 36-1 and 36-2 of the sampling latch circuit 26U, respectively, and switches 43-0, 43-1, 43-2, 44-0, 44-1 and 44-2 are connected between the input and output terminals of them, respectively.

Of the switches mentioned, the switches 43-2 and 44-2 of the MSB are controlled between on/off with a latch control pulse C generated by a latch control circuit 45 and supplied thereto over a control line 46A. The other latches 43-0, 43-1, 44-0 and 44-1 are controlled between on/off with a latch control pulse D generated by the latch control circuit 45 and supplied thereto over a control line 46B.

Subsequently, circuit operation of the line sequence latch circuit 27U of the above-described configuration is described.

First, in the normal mode (3-bit mode), both of the latch control pulses C and D are outputted from the latch control circuit 45. Consequently, all of the switches 43-0 to 43-2 and 44-0 to 44-2 are permitted to be switched on/off in response to the latch control pulses C and D, and all of the latch circuits 41-0 to 41-2 and 42-0 to 42-2 are placed into an active state, that is, in a state wherein data can be written into (latched to) them.

On the other hand, when the 1-bit mode is set, the latch control pulse C is outputted from the latch control circuit 45 while the latch control pulse D is fixed to the "L" level. Consequently, only the switches 43-2 and 44-2 are permitted to be switched on/off in response to the latch control pulse C, and only the latch circuits 41-2 and 42-2 of the MSB are placed into a state (active state) wherein rewriting of data is permitted while the remaining latch circuits 41-0, 41-1, 42-0 and 42-1 are placed into another state (inactive state) wherein rewriting of data is inhibited.

As a result, when the 1-bit mode is set, writing current upon latch rewriting becomes low, and therefore, the power consumption can be reduced as much. It is to be noted that, if, in addition to the circuit operation described above, the values of the latch circuits 41-0, 41-1, 42-0 and 42-1 for the others than the MSB are compulsorily set to the logic "0" or the logic "1" immediately before the writing inhibition state is established, then a system which matches with circuit operation of the D/A conversion circuit 28U which is hereinafter described can be implemented.

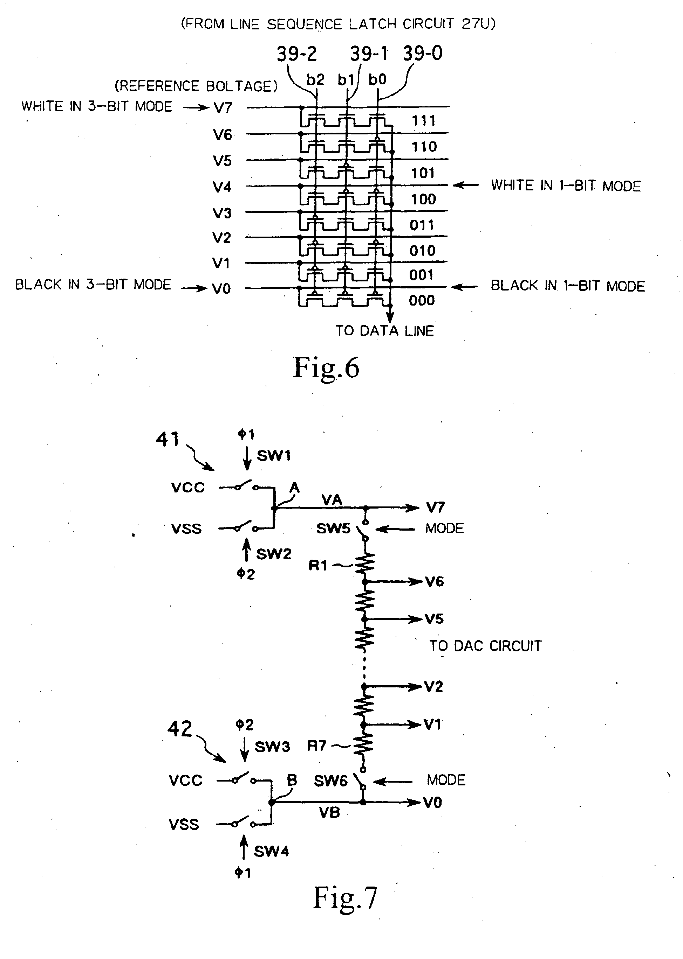

FIG. 6 is a circuit diagram showing an example of a configuration of a unit circuit of the reference voltage selection type D/A conversion circuit 28U. Here, 8 (= 2³) reference voltages V0 to V7 are prepared for 3-bit (b0, b1, b2) digital image data. One such unit circuit is disposed for each of the data lines ···, 22m-2, 22m-1, 22m, 22m+1, ··· of the display area section 12.

The reference voltage selection type D/A conversion circuit 28U of the configuration described above performs, in the normal mode (3-bit mode), such operation that a black level is applied as the reference voltage V0 while a white level is applied as the reference voltage V7 and one of the reference voltages V0 to V7 is selected based on 3-bit (b0, b1, b2) data.

On the other hand, in the 1-bit mode, for example, a black level is applied as the reference voltage V0 while a white level is applied as the reference voltage V4, and of input control lines 39-0, 39-1 and 39-2, only the input control line 39-2 of the MSB is used and a reference voltage is selected only with data of the MSB (b2) to represent the white or the black. At this time, the potentials to the input control lines 39-0 and 39-1 of the LSB side are compulsorily fixed to the logic "0".

In this manner, since, in the 1-bit mode, only the input control line 39-2 of the MSB is used to perform selection of a reference voltage in a state wherein the potentials to the input control lines 39-0 and 39-1 are compulsorily fixed to the logic "0", charging or discharging current of large capacity loads to the input control lines 39-0, 39-1 and 39-2 can be saved with regard to the input control lines 39-0 and 39-1, and consequently, reduction of the power consumption can be achieved.

It is to be noted that, while it is described here that the input control line 39-2 of the most significant bit (MSB) is used, use of an input control line is not limited to this, and it is otherwise possible to use any one of the input control lines and the potentials at the remaining input control lines should be fixed to the logic "0" or the logic "1" in response to the thus used input control line.

FIG. 7 is a circuit diagram showing an example of a configuration of the reference voltage generation circuit 15. Here, description is given taking a case wherein eight reference voltages V0 to V7 are generated corresponding to 3-bit digital image data as an example.

The reference voltage generation circuit 15 according to the present configuration example includes a switch circuit 41 including switches SW1 and SW2 and another switch circuit 42 including switches SW3 and SW4 which switch a positive power supply voltage VCC and a negative power supply voltage VSS in a fixed period in the opposite phases to each other, and seven dividing resistors R1 to R7 connected in series between output terminals A and B of the switch circuits 41 and 42 with switches SW5 and SW6 interposed therebetween, respectively. Here, the reason why the positive power supply voltage VCC and the negative power supply voltage VSS are switched with the opposite phases to each other in a fixed period, for example, in a 1H (H is a horizontal scanning interval) period, is that it is intended to AC drive the liquid crystal in order to prevent deterioration of the liquid crystal.

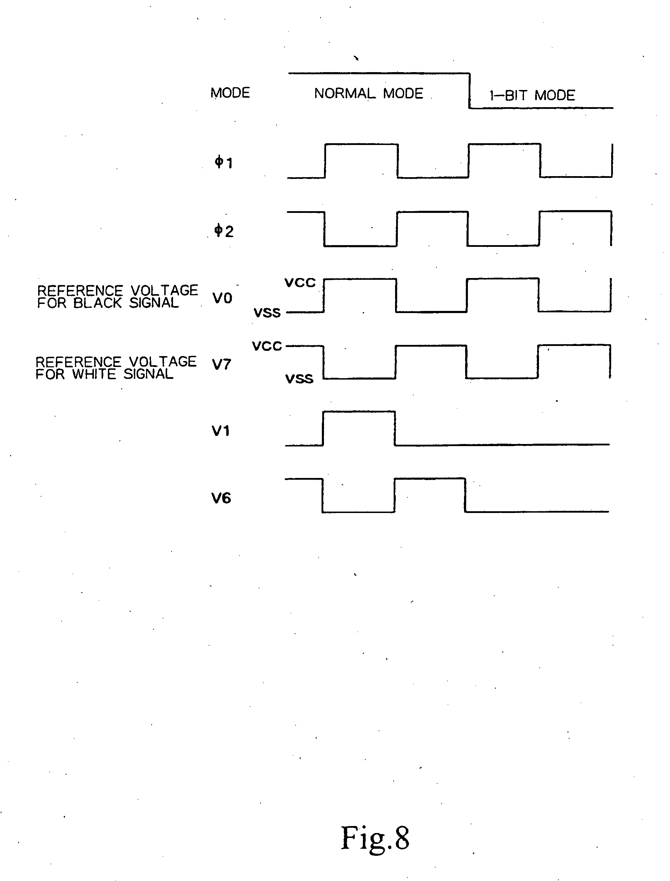

In the reference voltage generation circuit 15 having the configuration described above, the reference voltage V0 for a black signal and the reference voltage V7 for a white signal are both produced by switching the positive power supply voltage VCC and the negative power supply voltage VSS in a fixed period based on control pulses φ1 and φ2 by the switch circuits 41 and 42 as shown in a timing chart of FIG. 8. Meanwhile, the reference voltages V1 to V6 for the intermediate gradations are produced by resistance division by the dividing resistors R1 to R7 of the reference voltage V0 for a block signal and the reference voltage V7 for a white signal.

On the other hand, in the 1-bit mode, the switches SW5 and SW6 are opened (switched off) to stop supply of current to the dividing resistors R1 to R7. As a result, since no current flows to the dividing resistors R1 to R7 any more and the power consumption by the dividing resistors R1 to R7 is eliminated, reduction of the power consumption can be anticipated.

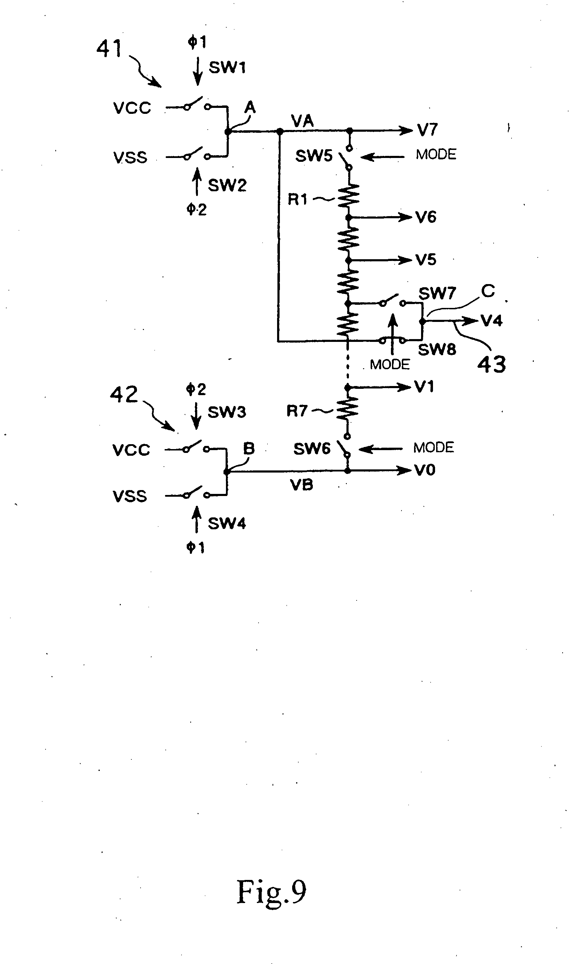

FIG. 9 is a circuit diagram showing another example of a configuration of the reference voltage generation circuit 15. In FIG. 9, like portions to those of FIG. 7 are denoted by like reference characters. It is to be noted that the reference voltage generation circuit 15 according to the present configuration example corresponds to the reference voltage selection type D/A conversion circuit of FIG. 6.

The reference voltage generation circuit 15 according to the present configuration example is configured such that, in order to make it correspond to the reference voltage selection type D/A conversion circuit of FIG. 6, switches SW7 and SW8 are connected between a voltage line 43 which provides the reference voltage V4 and an output terminal A of the switch circuit 41 and a voltage dividing point C of the reference voltage V4, respectively, and are controlled between on/off based on a mode signal of the 1-bit mode.

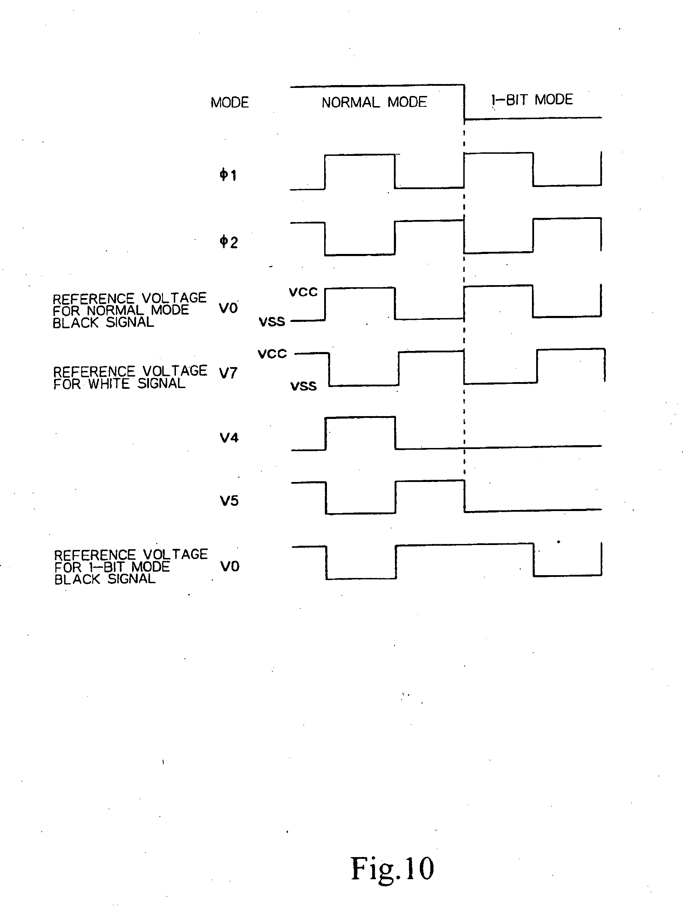

Here, the switch SW7 is a switch which is placed into an on (closed) state in the normal mode (3-bit mode), and the switch SW8 is a switch which is placed into an on state in the 1-bit mode. Consequently, in the 1-bit mode, as apparent from a timing chart of FIG. 10, the switches SW5 and SW6 are placed into an off state so that current does not flow to the dividing resistors R1 to R7 for producing the reference voltages V1 to V6 of the intermediate gradations and simultaneously the reference voltage V7 for a white signal is outputted to the voltage line 43 which provides the reference voltage V4 similarly as in the case of the preceding configuration example.

As a result, since, in the 1-bit mode, power consumption by the dividing resistors R1 to R7 disappears, reduction of the power consumption can be anticipated, and the reference voltage selection type D/A conversion circuit 28U can select the reference voltage for white/black using only one input control line as described hereinabove.

It is to be noted that, while, in the embodiment described above, description is given taking a case wherein the present invention is applied to a liquid crystal active matrix type display apparatus as an example, the present invention is not limited to this and can be applied similarly also to other active matrix type display apparatus such as an EL display apparatus wherein an electroluminescence (EL) element is used as an electro-optical element of each pixel.

Further, while, in the embodiment described above, description is given taking the 1-bit mode (2-gradation mode) as an example of a low gradation mode which is one of the power saving modes, the applicable mode is not limited to this, and use of any gradation mode which uses a smaller number of gradations than the normal mode can achieve corresponding reduction of the power consumption.

Furthermore, the active matrix type display apparatus according to the embodiment described above is applied as a display unit for OA equipment such as a personal computer or a word processor or for a television receiver or the like, and are used suitably as an output display section for a portable terminal such as a portable telephone set or a PDA for which miniaturization and compaction of an apparatus body are being proceeded.

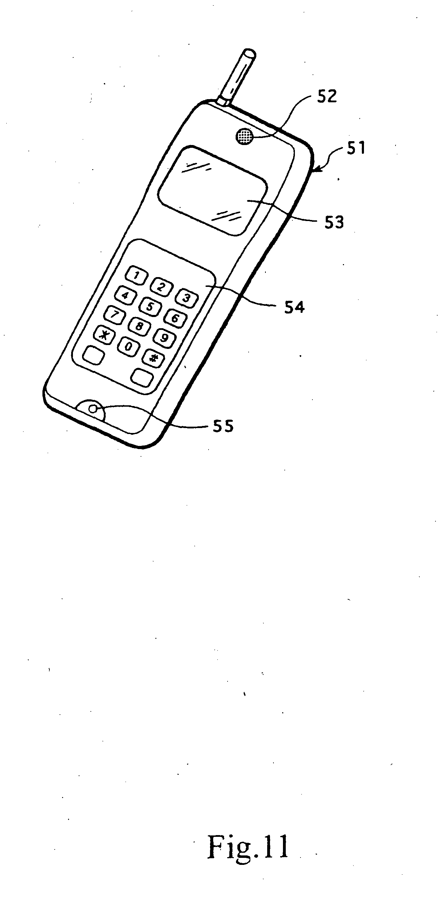

FIG. 11 is a view of an appearance showing an outline of a configuration of a portable terminal, for example, a portable telephone set, to which the present invention is applied.

The portable telephone set according to the present example is configured such that a speaker section 52, a display section 53, an operation section 54 and a microphone section 55 are disposed in order from the upper side on a front face side of an apparatus housing 51. In the portable telephone set having such a configuration as just described, for example, a liquid crystal display apparatus is used for the display section 53, and as this liquid crystal display apparatus, a liquid crystal active matrix type display apparatus according to the embodiment described above is used.

In this manner, since, in a portable terminal such as a portable telephone set, the liquid crystal active matrix type display apparatus described is used as the display section 53, the power consumption of the circuits incorporated in the liquid crystal display apparatus can be reduced with certainty when the liquid crystal display apparatus is in the 1-bit mode which is one of the power saving modes. Consequently, reduction of the power consumption of the display apparatus can be anticipated, and therefore, the power consumption of the terminal body can be reduced.

As described above, according to the present invention, in an active matrix type display apparatus or a portable terminal which uses the active matrix type display apparatus as a display section thereof, only a number of circuit portions equal to the number of gradations in a horizontal driving circuit are placed into an active state when a low gradation mode wherein a smaller number of gradations than that in a normal mode are used is set while the remaining circuit portions are placed into an inactive state and do not consume the power. Consequently, reduction of the power consumption as much can be anticipated.

## Claims

1. An active matrix type display apparatus, comprising:
a display area section (12) wherein pixels (23) each having an electro-optical device are disposed in a matrix manner;
a vertical driving circuit (14) for selecting the pixels of said display area section (12) in a unit of a row;
a horizontal driving circuit (13U, 13D) for receiving digital image data as an input thereto, said horizontal driving circuit (13U, 13D) including a sampling latch circuit (26U) for successively sampling and latching the digital image data, a line sequence latch circuit (27U) for line sequence the latch data of said sampling latch circuit, and said horizontal driving circuit is **characterized in that** it further comprises:
a D/A conversion circuit (28U) for converting the digital image data line sequenced by said line sequence latch circuit into an analog image signal in order to supply the digital image data as an analog image signal to the pixels of a row selected by said vertical driving circuit (14); and
a control circuit (16) for selectively assuming a low gradation mode which uses a smaller number of gradations than a normal mode, said control circuit (16) being configured to place only a number of circuit portions of said horizontal driving circuit (13U, 13D) equal to the number of gradations into an active state when the low gradation mode is being set, wherein said control circuits (16) is configured to use only a number of input control lines equal to the number of gradations from among input control lines of said D/A conversion circuit (28U) and to fix the potentials at the remaining input control lines to the logic "0" or the logic "1".

2. An active matrix type display apparatus as set forth in claim 1, **characterized in that**, said control circuit (16) is configured when the low gradation mode is being set, to permit rewriting of data only in a number of circuit portions of said sampling latch circuit (26U) equal to the number of gradations and to inhibit rewriting of data in the remaining circuit portions.

3. An active matrix type display apparatus as set forth in claim 1, **characterized in that**, said control circuit is configured when the low gradation mode is set, to permit rewriting of data only in a number of circuit portions of said line sequence latch circuit (27U) equal to the number of gradations but inhibits rewriting of data in the remaining circuit portions.

4. An active matrix type display apparatus as set forth in anyone of claims 1 to 3, **characterized in that** said D/A conversion circuit (28U) is a reference voltage selection type D/A conversion circuit and the low gradation mode is an n-gradation mode wherein a display is given in n gradations, and said control circuit (16) being configured to replace n reference voltages, which can be selected when the n-gradation mode is set, into corresponding reference voltages.

5. An active matrix type display apparatus as set forth in anyone of claim1 to 3, **characterized in that** said D/A conversion circuit (28U) is a reference voltage selection type D/A conversion circuit and includes a reference voltage generation circuit (15) for generating a plurality of reference voltages by resistance division, and, when the low gradation mode is set, said control circuit is configured to stop supply of current to the dividing resistors of said reference voltage generation circuit (15).

6. An active matrix type display apparatus as set forth in anyone of claims 1 to 5, **characterized in that** at least one of said sampling latch circuit (26U), said line sequence latch circuit (27U) and said D/A conversion circuit (28U) is formed integrally on the same substrate (11) together with said display area (12).

7. An active matrix type display apparatus as set forth in claim 6, **characterized in that** an active element of each of the pixels of said display area (12) section for driving said electro-optical element is formed from a thin film transistor, and at least one of said sampling latch circuit (26U), said line sequence latch circuit (27U) and said D/A conversion circuit (28U) is formed using a thin film transistor.

8. An active matrix type display apparatus as set forth in anyone of claims 1 to 7, **characterized in that** said electro-optical element is a liquid crystal cell.

9. An active matrix type display apparatus as set forth in anyone of claims 1 to 7, **characterized in that** said electro-optical element is an electroluminescence element.

10. A portable terminal, **characterized by** using, as a display section thereof, an active matrix type display apparatus according to anyone of claims 1 to 9.

## Patentansprüche

1. Aktivmatrix-Anzeigevorrichtung, umfassend:
eine Anzeigebereichssektion (12), wobei Pixel (23), die jeweils ein elektrooptisches Bauelement haben, in Form einer Matrix angeordnet sind,
einen vertikalen Ansteuerkreis (14) zum Auswählen der Pixel der Anzeigebereichssektion (12) in einer Einheit einer Reihe,
einen horizontalen Ansteuerkreis (13U, 13D) zum Empfangen digitaler Bilddaten als eine Eingabe da hinein, wobei der horizontale Ansteuerkreis (13U, 13D) einen Abtastpufferkreis (26U) zum sukzessiven Abtasten und Pufferspeichern der digitalen Bilddaten und einen Leitungssequenzpufferkreis (27U) zum Leitungssequenzieren der Pufferdaten des Abtastpufferkreises enthält, und
wobei der horizontale Ansteuerkreis **dadurch gekennzeichnet ist, dass** er des Weiteren einen D/A-Wandlerkreis (28U) umfasst, um die durch den Leitungssequenzpufferkreis leitungssequenzierten digitalen Bilddaten in ein analoges Bildsignal umzuwandeln, um die digitalen Bilddaten als ein analoges Bildsignal in die Pixel einer Reihe einzuspeisen, die durch den vertikalen Ansteuerkreis (14) ausgewählt wurden, und
einen Steuerkreis (16) zum selektiven Annehmen eines Niedriggradationsmodus, der eine kleinere Anzahl von Gradationen als ein normaler Modus verwendet, wobei der Steuerkreis (16) dafür konfiguriert ist, nur eine Anzahl von Schaltkreisabschnitten des horizontalen Ansteuerkreises (13U, 13D), die gleich der Anzahl von Gradationen ist, in einen aktiven Zustand zu versetzen, wenn der Niedriggradationsmodus eingestellt wird, wobei der Steuerkreis (16) dafür konfiguriert ist, nur eine Anzahl von Eingangssteuerleitungen, die gleich der Anzahl von Gradationen ist, unter den Eingangssteuerleitungen des D/A-Wandlerkreises (28U) zu verwenden und die Potenziale an den übrigen Eingangssteuerleitungen auf eine logische "0" oder eine logische "1" zu fixieren.

2. Aktivmatrix-Anzeigevorrichtung nach Anspruch 1, **dadurch gekennzeichnet, dass** der Steuerkreis (16) dafür konfiguriert ist, wenn der Niedriggradationsmodus eingestellt ist, das Überschreiben von Daten nur in einer Anzahl von Schaltkreisabschnitten des Abtastpufferkreises (26U) zuzulassen, die gleich der Anzahl von Gradationen ist, und das Überschreiben von Daten in den übrigen Schaltkreisabschnitten zu unterbinden.

3. Aktivmatrix-Anzeigevorrichtung nach Anspruch 1, **dadurch gekennzeichnet, dass** der Steuerkreis dafür konfiguriert ist, wenn der Niedriggradationsmodus eingestellt ist, das Überschreiben von Daten nur in einer Anzahl von Schaltkreisabschnitten des Leitungssequenzpufferkreises (27U) zuzulassen, die gleich der Anzahl von Gradationen ist, und das Überschreiben von Daten in den übrigen Schaltkreisabschnitten unterbindet.

4. Aktivmatrix-Anzeigevorrichtung nach einem der Ansprüche 1 bis 3, **dadurch gekennzeichnet, dass** der D/A-Wandlerkreis (28U) ein Bezugsspannungsauswahl-D/A-Wandlerkreis ist und der Niedriggradationsmodus ein n-Gradationsmodus ist, wobei eine Anzeige in n Gradationen erfolgt, und der Steuerkreis (16) dafür konfiguriert ist, n Bezugsspannungen zu ersetzen, die ausgewählt werden können, wenn der n-Gradationsmodus eingestellt ist, zu entsprechenden Bezugsspannungen zu ersetzen.

5. Aktivmatrix-Anzeigevorrichtung nach einem der Ansprüche 1 bis 3, **dadurch gekennzeichnet, dass** der D/A-Wandlerkreis (28U) ein Bezugsspannungsauswahl-D/A-Wandlerkreis ist und einen Bezugsspannungserzeugungskreis (15) enthält, um mehrere Bezugsspannungen durch Widerstandsteilung zu erzeugen, und dass, wenn der Niedriggradationsmodus eingestellt ist, der Steuerkreis dafür konfiguriert ist, die Zufuhr von Strom zu den Teilungswiderständen des Bezugsspannungserzeugungskreises (15) zu beenden.

6. Aktivmatrix-Anzeigevorrichtung nach einem der Ansprüche 1 bis 5, wodurch gekennzeichnet, das mindestens einer von dem Abtastpufferkreis (26U), dem Leitungssequenzpufferkreis (27U) und dem D/A-Wandlerkreis (28U) integral auf demselben Substrat (11) zusammen mit dem Anzeigebereich (12) ausgebildet ist.

7. Aktivmatrix-Anzeigevorrichtung nach Anspruch 6, **dadurch gekennzeichnet, dass** ein aktives Element eines jeden Pixels des Anzeigebereichssektion (12) zum Ansteuern des elektro-optischen Bauelements aus einem Dünnschichttransistor gebildet ist und mindestens einer von dem Abtastpufferkreis (26U), dem Leitungssequenzpufferkreis (27U) und dem D/A-Wandlerkreis (28U) unter Verwendung eines Dünnschichttransistors gebildet ist.

8. Aktivmatrix-Anzeigevorrichtung nach einem der Ansprüche 1 bis 7, **dadurch gekennzeichnet, dass** das elektro-optische Bauelement eine Flüssigkristallzelle ist.

9. Aktivmatrix-Anzeigevorrichtung nach einem der Ansprüche 1 bis 7, **dadurch gekennzeichnet, dass** das elektro-optische Bauelement ein Elektrolumineszenz-Element ist.

10. Portables Endgerät, **dadurch gekennzeichnet, dass** es als Anzeigesektion eine Aktivmatrix-Anzeigevorrichtung nach einem der Ansprüche 1 bis 9 verwendet.

## Revendications

1. Appareil d'affichage de type à matrice active, comportant :
une section de zone d'affichage (12) dans laquelle des pixels (23) possédant chacun un dispositif électro-optique sont disposés sous forme de matrice ;
un circuit de commande verticale (14) pour sélectionner les pixels de ladite section de zone d'affichage (12) dans une unité de rangée ;
un circuit de commande horizontale (13U, 13D) pour recevoir des données d'images numériques en tant qu'entrée, ledit circuit de commande horizontale (13U, 13D) comprenant un circuit d'échantillonnage de verrouillage (26U) pour échantillonner et verrouiller successivement les données d'images numériques, un circuit de verrouillage de séquence de ligne (27U) pour établir une séquence de ligne des données de verrouillage dudit circuit d'échantillonnage de verrouillage, et
ledit circuit de commande horizontale est **caractérisé en ce qu'**il comporte en outre un circuit de conversion N/A (28U) pour convertir la ligne de données d'images numériques séquencée par ledit circuit de verrouillage de séquence de ligne en un signal d'image analogique afin de délivrer les données d'images numériques en tant que signal d'image analogique aux pixels d'une rangée sélectionnée par ledit circuit de commande verticale (14) ; et
un circuit de contrôle (16) pour adopter sélectivement un mode de faible gradation qui utilise un plus petit nombre de gradations qu'un mode normal, ledit circuit de contrôle (16) étant configuré pour placer uniquement un nombre de parties de circuit dudit circuit de commande horizontale (13U, 13D) égal au nombre de gradations dans un état actif lorsque le mode de faible gradation est fixé, dans lequel ledit circuit de contrôle (16) est configuré pour utiliser uniquement un nombre de lignes de contrôle d'entrée égal au nombre de gradations parmi les lignes de contrôle d'entrée du circuit de conversion N/A (28U) et pour fixer les potentiels aux lignes de contrôle d'entrée restantes au "0" logique ou au "1" logique.

2. Appareil d'affichage de type à matrice active selon la revendication 1, **caractérisé en ce que**, ledit circuit de contrôle (16) est configuré lorsque le mode de faible gradation est fixé, pour permettre la réécriture des données uniquement dans un nombre de parties de circuit dudit circuit d'échantillonnage de verrouillage (26U) égal au nombre de gradations et pour empêcher la réécriture des données dans les parties de circuit restantes.

3. Appareil d'affichage de type à matrice active selon la revendication 1, **caractérisé en ce que**, ledit circuit de contrôle est configuré lorsque le mode de faible gradation est fixé, pour permettre la réécriture des données uniquement dans un nombre de parties de circuit dudit circuit de verrouillage de séquence de ligne (27U) égal au nombre de gradations mais empêche la réécriture des données dans les parties de circuit restantes.

4. Appareil d'affichage de type à matrice active selon l'une quelconque des revendications 1 à 3, **caractérisé en ce que** le circuit de conversion N/A (28U) est un circuit de conversion N/A de type à sélection de tension de référence et le mode de faible gradation est un mode de gradation n dans lequel un affichage est donné dans n gradations, et ledit circuit de contrôle (16) étant configuré pour remplacer n tensions de référence, qui peuvent être sélectionnées lorsque le mode de gradation n est fixé, dans des tensions de référence correspondantes.

5. Appareil d'affichage de type à matrice active selon l'une quelconque des revendications 1 à 3, **caractérisé en ce que** ledit circuit de conversion N/A (28U) est un circuit de conversion N/A de type à sélection de tension de référence et comprend un circuit de génération de tension de référence (15) pour générer une pluralité de tensions de référence par division de résistance, et, lorsque le mode de faible gradation est fixé, ledit circuit de contrôle est configuré pour arrêter la délivrance de courant aux résistances de division dudit circuit de génération de tension de référence (15).

6. Appareil d'affichage de type à matrice active selon l'une quelconque des revendications 1 à 5, **caractérisé en ce qu'**au moins l'un dudit circuit d'échantillonnage de verrouillage (26U), dudit circuit de verrouillage de séquence de ligne (27U) et dudit circuit de conversion N/A (28U) est formé d'une seule pièce sur le même substrat (11) conjointement avec la zone d'affichage (12).

7. Appareil d'affichage du type à matrice active selon la revendication 6, **caractérisé en ce qu'**un élément actif de chacun des pixels de ladite section de zone d'affichage (12) pour exciter ledit élément électro-optique est formé à partir d'un transistor à film mince, et au moins l'un dudit circuit d'échantillonnage de verrouillage (26U), dudit circuit de verrouillage de séquence de ligne (27U) et dudit circuit de conversion N/A (28U) est formé en utilisant un transistor à film mince.

8. Appareil d'affichage du type à matrice active selon l'une quelconque des revendications 1 à 7, **caractérisé en ce que** ledit élément électro-optique est une cellule à cristaux liquides.

9. Appareil d'affichage du type à matrice active selon l'une quelconque des revendications 1 à 7, **caractérisé en ce que** ledit élément électro-optique est un élément électroluminescent.

10. Terminal portable, **caractérisé par** l'utilisation, en tant que section d'affichage, d'un appareil d'affichage du type à matrice active selon l'une quelconque des revendications 1 à 9.
